## Europäisches Patentamt

## European Patent Office

## Office européen des brevets

(19)

(11) Veröffentlichungsnummer: **0 197 328**
**B1**

(12) **EUROPÄISCHE PATENTSCHRIFT**

(45) Veröffentlichungstag der Patentschrift:
**25.10.89**

(51) Int. Cl.⁴: **H04N 9/093, H04N 5/21**

(21) Anmeldenummer: **86103142.5**

(22) Anmeldetag: **08.03.86**

(54) Verfahren zur Erzeugung von Korrektursignalen für die Raster- und Bildabschattungskorrektur.

(30) Priorität: **06.04.85 DE 3512631**

(43) Veröffentlichungstag der Anmeldung:
**15.10.86 Patentblatt 86/42**

(45) Bekanntmachung des Hinweises auf die Patenterteilung:
**25.10.89 Patentblatt 89/43**

(84) Benannte Vertragsstaaten:
**DE FR GB NL**

(56) Entgegenhaltungen:
**DE-A- 3 107 042**
**DE-A- 3 114 889**
**DE-A- 3 114 922**

(73) Patentinhaber: **ROBERT BOSCH GMBH, Postfach 50, D-7000 Stuttgart 1(DE)**

(72) Erfinder: **Bähring, Helmut, Dipl.-Ing., Hermannstädterweg 15, D-6100 Darmstadt(DE)**

# Beschreibung

## Stand der Technik

Die Erfindung geht aus von einem Verfahren zur Erzeugung von Korrektursignalen für die Raster- und/oder Bildabschattungskorrektur einer Farbfernsehkamera nach der Gattung des Hauptanspruchs gemäß DE 3 107 042 A1.

Um bei einer Farbfernsehkamera mit mehreren, insbesondere drei Aufnahmeröhren, die Raster der Röhren einwandfrei zur Deckung zu bringen, ist nicht nur die Verschiebung der gesamten Raster in horizontaler und vertikaler Richtung notwendig, sondern auch eine zeilenweise Korrektur der Abtaststrahlen erforderlich. Dazu werden üblicherweise den Horizontal- und Vertikal-Ablenksignalen für die Abtaststrahlen Korrektursignale überlagert, so daß die Rasterdeckung auch zeilenweise erreicht wird, was besonders bei hochauflösenden Fernsehkameras mit z.B. doppelter Zeilenzahl wichtig ist.

Diese Korrektursignale haben beispielsweise im einfachsten Falle einen gleichmäßigen, parabelförmigen Verlauf. Es sind aber auch schon digital erzeugte Korrektursignale gemäß dem eingangs genannten Verfahren bekannt geworden, in deren Verlauf kleinere Sprünge und andere Unregelmäßigkeiten auftreten, so daß ohne weitere Maßnahmen der Verlauf der Korrektursignale ungleichmäßig wäre.

Zur Vermeidung dieser Ungleichmäßigkeit besteht bei horizontalfrequenten Korrektursignalen die Möglichkeit, die zeitlich aufeinander folgenden Korrekturwerte mit Hilfe eines Integrators oder Tiefpasses linear zu interpolieren. Diese einfache Möglichkeit der linearen Interpolation besteht für die vertikalfrequenten Korrektursignale nicht, da hierbei benachbarte Korrekturwerte nicht zeitlich aufeinander folgen, sondern zwischen diesen noch eine bestimmte Anzahl von Rasterzeilen liegen. Aus diesem Grunde ist hierfür ein anderes Verfahren, beispielsweise eine digitale lineare Interpolation anzuwenden.

Dazu ist aus der DE 3 107 042 A1 ein Verfahren der eingangs genannten Art bekannt, bei dem zum Erzeugen einer stetigen Korrekturfunktion in vertikaler Richtung für die Korrekturstellen der Rasterzeilen interpolierte Differenzwerte erzeugt und dem jeweiligen Korrekturwert an dieser Stelle hinzuaddiert werden. Das hat vor allem den Nachteil, daß außer einer möglichen Fehlerfortpflanzung durch fortschreitende lineare Interpolation meist noch ein gut sichtbarer und dadurch stark störender Abschattungsfehler auftritt.

Bei der sogenannten Bildabschattungskorrektur, welche zur Korrektur von über das Bild verteilten Helligkeitsschwankungen dient, können sich ähnliche Schwierigkeiten ergeben. Aus der DE-PS 3 229 586 ist bereits eine Abschattungs-Ausgleichsvorrichtung bekannt, bei der sogenannte Abschattungs-Ausgleichskoeffizienten zu einem bestimmten Abtastzeitpunkt berechnet, gespeichert und zur Durchführung der Abschattungskorrektur der entsprechenden Ausgleichseinheit zugeführt werden. Hierbei ist eine Interpolationseinheit vorgesehen, die mit Hilfe der gespeicherten Ausgleichskoeffizienten eine Berechnung zur Bestimmung von weiteren, vorbestimmten Abschnitten der Abtastfläche entsprechenden Ausgleichskoeffizienten mittels Interpolation durchführen kann. Diese bekannte Abschattungs-Ausgleichsvorrichtung hat jedoch den Nachteil, daß damit nur eine starre lineare Interpolation möglich ist. Ein weiterer Nachteil besteht darin, daß jeweils vom einen zum anderen Ausgleichskoeffizienten fortschreitend linear interpoliert wird, wodurch sich auftretende Fehler immer weiter fortpflanzen und summieren können.

Der Erfindung liegt daher die Aufgabe zugrunde, ein Verfahren der eingangs genannten Art anzugeben, bei welchem eine stetige Korrekturfunktion zwischen zwei Korrekturwerten durch digitale Interpolation erzeugbar ist, ohne daß dabei auftretende Fehler summiert werden.

Diese Aufgabe wird durch die im Hauptanspruch gekennzeichneten Merkmale gelöst.

Das erfindungsgemäße Verfahren mit den kennzeichnenden Merkmalen des Hauptanspruchs hat den Vorteil, daß durch die gleichzeitige Verfügbarkeit von Korrekturwerten und Differenzwerten diese digitale Interpolation sehr flexibel ist. So kann beispielsweise ohne Änderung der Schaltungsanordnung bei Bedarf die Anzahl der Korrekturzeilen des matrixförmigen Punktrasters variiert werden, z.B. bei Verwendung von anderen Zeilennormen. Außerdem kann die Form der V-Korrekturfunktion zwischen den Korrekturzeilen beliebig gewählt werden, was für die Beseitigung von Bildabschattungsfehlern von Bedeutung ist.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, daß bei der Erzeugung von Korrektursignalen für die Rasterkorrektur den Interpolationswerten jeweils zusätzlich ein Kurvensegmentwert überlagert wird, wodurch streifenförmige, horizontal verlaufende Helligkeitsunterschiede vermieden werden. Weiterhin ist vorteilhaft, daß durch Umschalten der Adreßebene des Interpolators feiner quantisierte Interpolationswerte erzeugbar sind, welche zur Ableitung eines höher quantisierten Korrektursignals für die V-Rasterkorrektur herangezogen werden können.

## Zeichnung

Ausführungsbeispiele der Erfindung sind in der Zeichnung dargestellt und in der nachfolgenden Beschreibung näher erläutert. Es zeigen:

Fig. 1 ein Blockschaltbild mit der Schaltung zur Durchführung des erfindungsgemäßen Verfahrens,

Fig. 2 ein Spannungs-/Zeit-Diagramm der Korrekturwerte für die H- und V-Richtung,

Fig. 3 ein Detail-Blockschaltbild für die Speichersteuerung,

Fig. 4 ein Detail-Schaltbild mit der analogen Korrektursignalverarbeitung,

Fig. 5 ein Diagramm zur Erläuterung der Auflösungserhöhung bei der digitalen Interpolation,

Fig. 6 ein Spannungs-Zeit-Diagramm zur Erläuterung einer verbesserten Bildabschattungskorrektur,

Fig. 7 ein Detail-Blockschaltbild gemäß Fig. 3 mit einer Erweiterung der Speichermöglichkeiten.

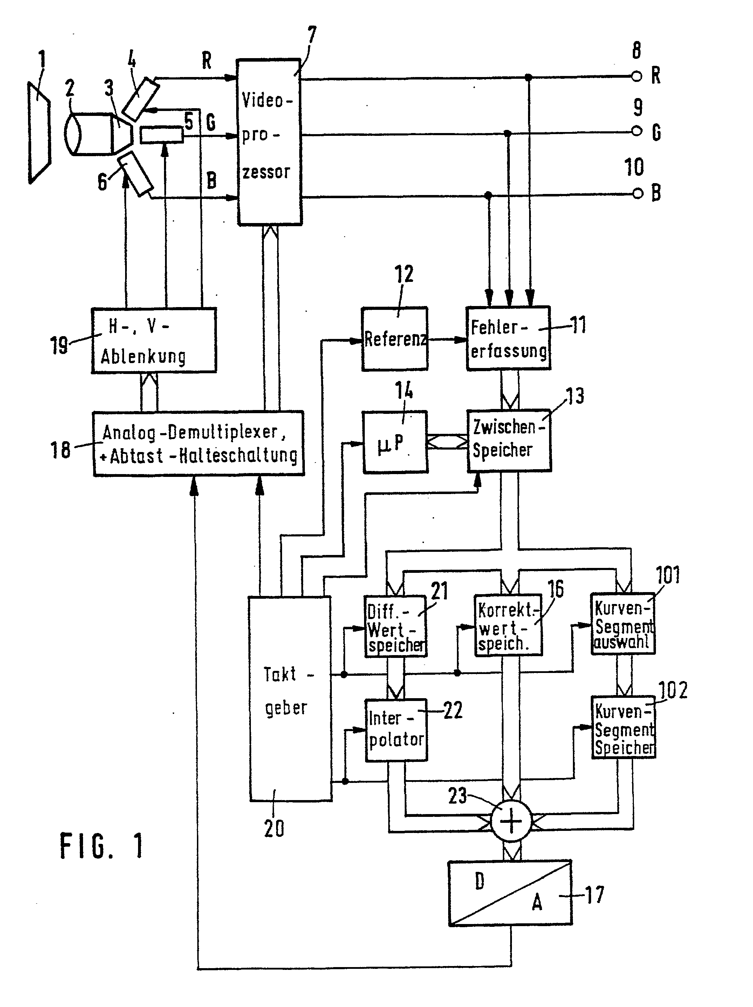

In Fig. 1 ist ein Blockschaltbild nur des Teiles einer Farbfernsehkamera, insbesondere HDTV-Kamera, dargestellt, welcher zur Erläuterung des erfindungsgemäßen Verfahrens notwendig ist. Zur Gewinnung der Korrektursignale wird eine Testvorlage 1, welche für die V-Rasterkorrektur schräge, um 45° geneigte Linien, für die H-Rasterkorrektur senkrechte Linien enthält und für die Bildabschattungskorrektur eine weiße Fläche darstellt, von der Farbfernsehkamera abgetastet. Über das Objektiv 2 und eine Farbteilungsoptik 3 wird die Testvorlage 1 auf die Signalelektroden der drei Aufnahmeröhren 4,5,6 projiziert, an deren Ausgängen die Farbsignale R,G,B abnehmbar sind. Diese Farbsignale werden in einem Videoprozessor 7 wie üblich weiterverarbeitet und stehen an den Ausgangsklemmen 8,9,10 als korrigierte Farbsignale zur Verfügung.

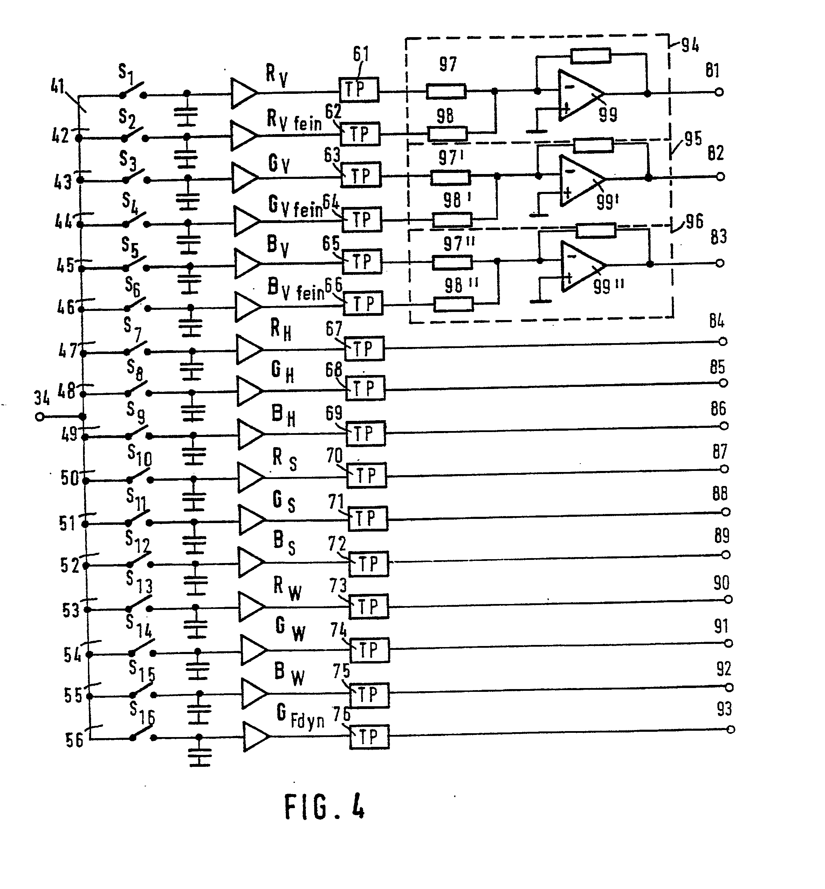

Für die Durchführung der Raster- und Bildabschattungskorrektur ist die im folgenden beschriebene Schaltung vorgesehen. Die drei Ausgänge des Videoprozessors 7 sind gleichzeitig mit einer Fehlererfassungsschaltung 11 verbunden, in welcher mit Hilfe von Referenzsignalen einer Referenzschaltung 12 digitale Fehlersignale erzeugt werden. In der Referenzschaltung 12 ist ein matrixförmiges Referenzpunktraster gespeichert, dessen Signale mit den der Fehlererfassungsschaltung 11 zugeführten Videosignalen verglichen wird. Bei der Rasterkorrektur wird die Lageabweichung der durch die Abtastung der Testbildvorlage entstandenen Videosignale zum Signal des Referenzpunktrasters gemessen, bei der Bildabschattungskorrektur wird das Videosignal der weißen Vorlage mit einer Referenzspannung verglichen. Die so gewonnenen Fehlermeßwerte werden danach über einen Zwischenspeicher 13 einem Mikroprozessor 14 zugeführt. Dieser Mikroprozessor 14 berechnet aus den Fehlermeßwerten je einen Korrekturwert, welcher in einen Korrekturwertspeicher 16 eingeschrieben wird. Dieser Speicher 16 ist so organisiert, daß jedem Referenzpunkt eine bestimmte Adresse zugeordnet ist. Bei der Abtastung des Bildes wird der Speicher 16 kontinuierlich ausgelesen, d.h. an jedem Referenzpunkt wird der entsprechende Korrekturwert aus dem Speicher 16 entnommen. Dieses Digitalwort wird dann durch einen D/A-Wandler 17 in ein analoges Signal umgewandelt. Das so gewonnene Analogsignal wird über eine Demultiplexer- und Verarbeitungsschaltung 18, welche in Zusammenhang mit Figur 4 näher erläutert wird, geleitet und den H- und V-Ablenkschaltungen 19 für die Rasterkorrektur bzw. dem Videoprozessor 7 für die Bildabschattungskorrektur zugeführt.

Sollten nach diesem ersten Abgleichvorgang die Videosignale noch fehlerhaft sein, so schließt sich ein zweiter Abgleichvorgang an. Nach der Korrektur der Ablenkkreise bzw. des Videoprozessors 7 wird ein neuer Fehlermeßwert gewonnen und erneut dem Mikroprozessor 14 zugeführt. Dieser berechnet einen neuen Korrekturwert, welcher durch Überschreibung des alten Wertes im Speicher 16 abgelegt wird. Dieser iterative Vorgang wird so lange fortgesetzt, bis die Abweichungen des Videosignals zum Referenzsignal gegen Null gehen.

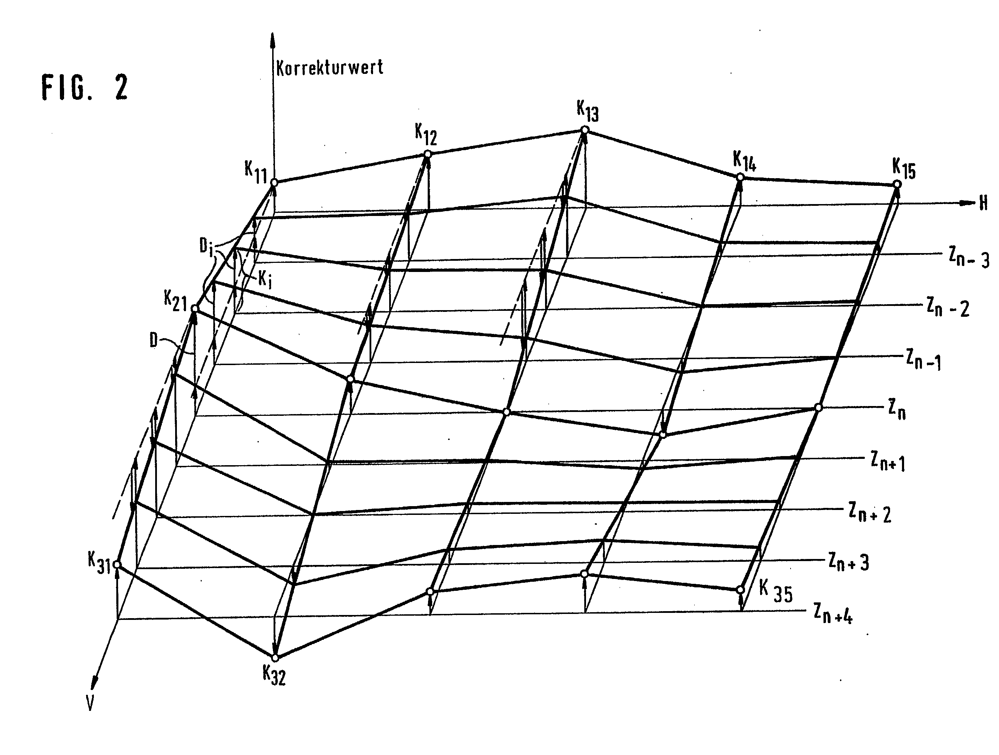

Während des Abtastvorganges des Bildes werden die Korrekturwerte nacheinander entsprechend der Korrekturmatrix (s. Fig. 2) ausgelesen. Fallen bei einer Abtastung Videozeile und Matrixzeile zusammen (z.B. $Z_n$), so werden die ausgelesenen Korrekturwerte K ohne Wertänderung zur Korrektur der Ablenksignale bzw. des Videosignals verwendet. Zwischen zwei in vertikaler Richtung benachbarten Korrekturwerten K (z.B. $K_{11}$ und $K_{21}$) befindet sich jeweils eine Anzahl von Videozeilen (vorzugsweise zwischen 16 und 32), von denen in Fig. 2 der Übersichtlichkeit halber jeweils nur 3 Zeilen $Z_{n-1}$ bis $Z_{n-3}$ bzw. $Z_{n+1}$ bis $Z_{n+3}$ dargestellt sind. Um eine stetige Korrekturfunktion zwischen diesen zwei Korrekturwerten ($K_{11}$ und $K_{21}$) zu erhalten, werden die Korrekturwerte für diesen Bereich interpoliert. In horizontaler Richtung (z.B. für die Korrekturwerte $K_{11}$ bis $K_{15}$) kann eine solche Interpolation mit Hilfe eines Tiefpasses realisiert werden, da hier die Korrekturwerte $K_{11}$ bis $K_{15}$ zeitlich aufeinanderfolgen. In vertikaler Richtung sind benachbarte Korrektur werte (z.B. $K_{11}$ bis $K_{31}$) nicht zeitlich aufeinanderfolgend, da zwischen diesen Korrekturwerten eine bestimmte Anzahl von Videozeilen liegt. Aus diesem Grund wird hierbei eine digitale Interpolation durchgeführt.

Für diese digitale Interpolation wird gemäß der Erfindung neben dem Korrekturwertspeicher 16 ein Differenzwertspeicher 21, ein Interpolator 22 sowie ein Addierer 23 benötigt. In dem Differenzwertspeicher 21 wird die Differenz D von den in vertikaler Richtung benachbarten Korrekturwerten K (z.B. $K_{11}$ und $K_{21}$) abgelegt. Korrekturwertspeicher 16 und Differenzwertspeicher 21 werden parallel adressiert, d.h. jedem Korrekturwert K ist ein bestimmter Differenzwert D zugeordnet. Der Differenzwert D aus dem Differenzwertspeicher 21 wird im nachfolgenden Interpolator 22 interpoliert, so daß an seinem Ausgang für jede Videozeile ein bestimmter interpolierter Differenzwert $D_i$ abnehmbar ist. Dieser Interpolationswert $D_i$ wird mit dem zum Differenzwert D gehörenden Korrekturwert K addiert bzw. subtrahiert, so daß die so gebildete Summe den interpolierten Korrekturwert $K_i$ für die entsprechende Zeile darstellt.

In Fig. 2 sind die Korrekturwerte K einer nur teilweise gezeichneten Korrekturmatrix für die H- und V-Richtung dargestellt. Die Korrekturwerte $K_{11}$ bis $K_{35}$ sind somit im Korrekturwertspeicher 16 gespeichert, während die Differenz D zwischen z.B. $K_{11}$ und $K_{21}$ in dem Differenzwertspeicher 21 gespeichert ist. Aus dieser Differenz D werden im Interpolator 22 für jede Zeile die interpolierten Differenzwerte $D_i$ berechnet und zum Addierer 23 weitergeleitet.

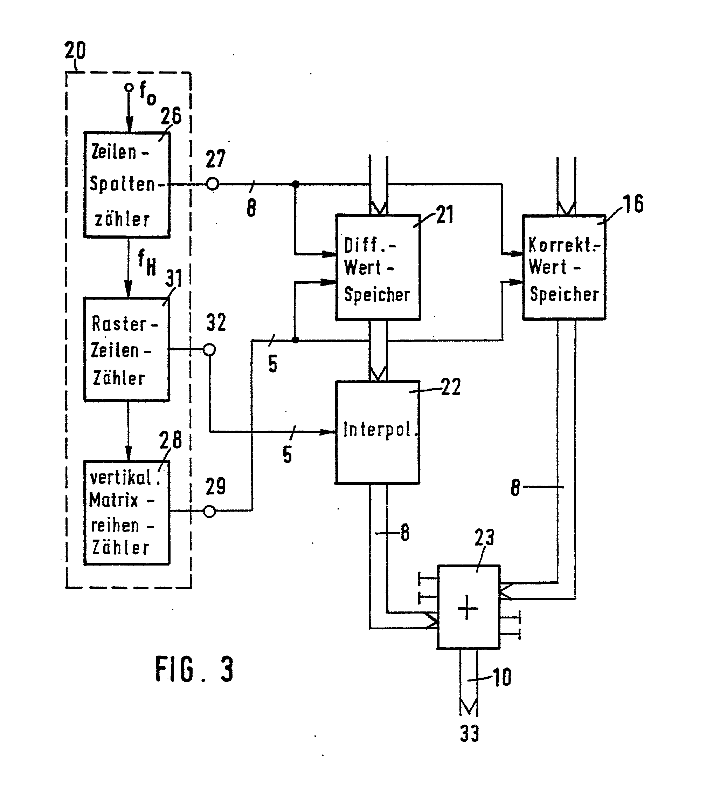

In Fig. 3 ist die Ansteuerung der Speicher 16 und 21 sowie des Interpolators 22 von der Taktgeberschaltung 20 dargestellt. Der Korrekturwertspeicher 16 und der Differenzwertspeicher 21 werden einerseits von einem Zeilenspaltenzäh ler 26 über den Ausgang 27 sowie von einem V-Matrixreihenzähler 28 über den Ausgang 29 parallel adressiert, d.h. jedem Korrekturwert K ist ein bestimmter Differenzwert D zugeordnet. Der Matrixreihenzähler 28 wählt nacheinander die Zeilen oder Reihen der Korrekturmatrix an, und der Zeilenspaltenzähler 26 adressiert die Korrekturwerte K (z.B. $K_{11}$ bis $K_{15}$) auf der Matrixzeile. Der Interpolator 22 wird adressiert durch jeweils einen Differenzwert D aus dem Differenzwertspeicher 21 sowie der Zeilennummer, welche innerhalb des Intervalls zwischen zwei in vertikaler Richtung benachbarten Korrekturwerten K (z.B. $K_{11}$ und $K_{21}$) liegen, aus dem Rasterzeilenzähler 31 über den Ausgang 32. Somit generiert der Interpolator 22 für einen bestimmten Differenzwert D aus dem Speicher 21 für jede Videozeile einen interpolierten Differenzwert $D_i$. Die 8Bit-Ausgangssignale des Interpolators 22 werden hierbei den 8 niederwertigen Eingängen des 10 Bit-Addierers 23 zugeführt, wobei die zwei Eingänge für die zwei obersten Bit (MSB) auf Bezugspotential liegen. Die 8 Bit-Ausgangssignale des Speichers 16 werden dagegen den 8 höherwertigen Eingängen des Addierers 23 zugeführt, wobei die zwei Eingänge für die zwei untersten Bit (LSB) auf Bezugspotential liegen. Die Ausgangssignale 33 des Addierers 23 werden nach Digital/Analog-Wandlung über die Klemme 34 der in Fig. 4 im Detail dargestellten Schaltung 18 zugeführt.

Diese Schaltung gemäß Fig. 4 besteht aus einer Anzahl von Abtast- und Halteschaltungen 41 bis 56, welche der Anzahl von durchzuführenden Korrekturen entspricht. An diese schließen sich je ein Tiefpaß 61 bis 76 an, so daß an den Ausgangsklemmen 81 bis 93 die Korrektursignale für die Rasterkorrektur (81 bis 86) sowie die Bildabschattungskorrektur (87 bis 92) abnehmbar sind. Die Schalter $S_1$ bis $S_{16}$ der Abtast- und Halteschaltungen 41 bis 56 werden innerhalb eines Korrekturintervalls (zwischen $K_{11}$ und $K_{12}$ in Fig. 2) nacheinander geschlossen und vor dem Schließen des nächsten Schalters wieder geöffnet, so daß während einer Videozeilenzeit mehrmals, z.B. ....16 mal, die Korrekturwerte für ein und dieselbe Korrektur übertragen werden. Die Schaltungen 41, 43 und 45 übertragen hierbei die Korrekturwerte für die V-Rasterkorrektur der Aufnahmeröhren für Rot, Grün und Blau; die Schaltungen 47, 48 und 49 die Korrekturwerte für die H-Rasterkorrektur der Aufnahmeröhren für Rot, Grün und Blau. Die Schaltungen 50, 51 und 52 bzw. 53, 54 und 55 übertragen die Korrekturwerte für die Bildabschattungskorrektur bezüglich des Schwarzwertes bzw. des Weißwertes für die drei Farbsignale R,G,B. Schließlich überträgt die Schaltung 56 die Korrekturwerte für die dynamische Fokussierung der Grünröhre.

Für die Interpolation in vertikaler Richtung wird an sich ein hochauflösender D/A-Wandler benötigt (≥ 12 Bit), da sonst eine Zeilenstruktur bei der Bildwiedergabe sichtbar wird. Da dieser Einsatz relativ kostenaufwendig ist, wird hier eine günstigere Lösung mit Hilfe einer geeigneten Programmierung des Interpolators 22 (PROM) angegeben, und zwar wird der Interpolator 22 so programmiert, daß mit Hilfe eines vom Mikroprozessor 14 abgegebenen Codierungsbit eine Umschaltung in der Adressebene des Interpolators 22 möglich ist. Sobald dieses Codierungsbit dem Interpolator 22 zugeführt wird, erfolgt eine höher quantisierte Interpolation der vom Differenzwertspeicher 21 zugeführten Digitalwerte. Diese höher quantisierten Interpolationswerte werden den Schaltungen 42, 44 und 46 zugeleitet, deren Ausgangssignale über die jeweiligen Tiefpässe 62, 64 und 66 je einem zweiten Eingang von drei Addierstufen 94, 95 und 96 zugeführt werden. An den ersten Eingängen dieser Addierstufen 94,95,96 liegen die von den Abtast- und Halteschaltungen 41, 43 und 45 weitergeleiteten Korrektursignale.

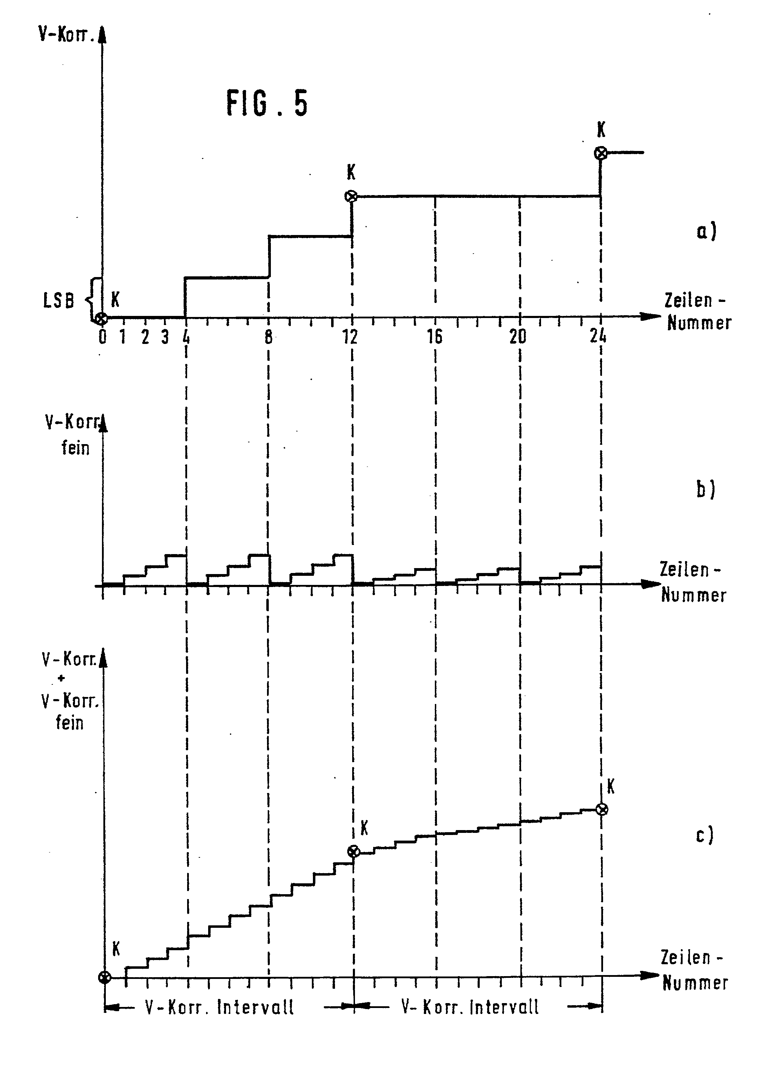

In Fig. 5 sind diese Korrekturwerte zur Auflösungserhöhung der digitalen Interpolation dargestellt. An den ersten Eingängen der Addierschaltungen 94, 95 und 96 liegt also ein Signal gemäß Fig. 5a, während an den zweiten Eingängen dieser Addierschaltungen das höherquantisierte Signal gemäß Fig. 5b anliegt. Das Signal gemäß Fig. 5b ist der Übersichtlichkeit halber bereits amplitudenmäßig komprimiert dargestellt, wie es eigentlich erst durch das Zusammenschalten der Widerstandskombination 97, 98 bzw. 97', 98', bzw. 97'', 98'', wobei die Widerstände 98 jeweils n mal größer sind als die Widerstände 97, entsteht. Durch Anschluß dieser Widerstände 97 und 98 an den invertierenden Eingang der Operationsverstärker 99, 99' bzw. 99'' ist an den Ausgangsklemmen 81, 82 bzw. 83 ein höher quantisiertes Korrektursignal gemäß Fig. 5c abnehmbar.

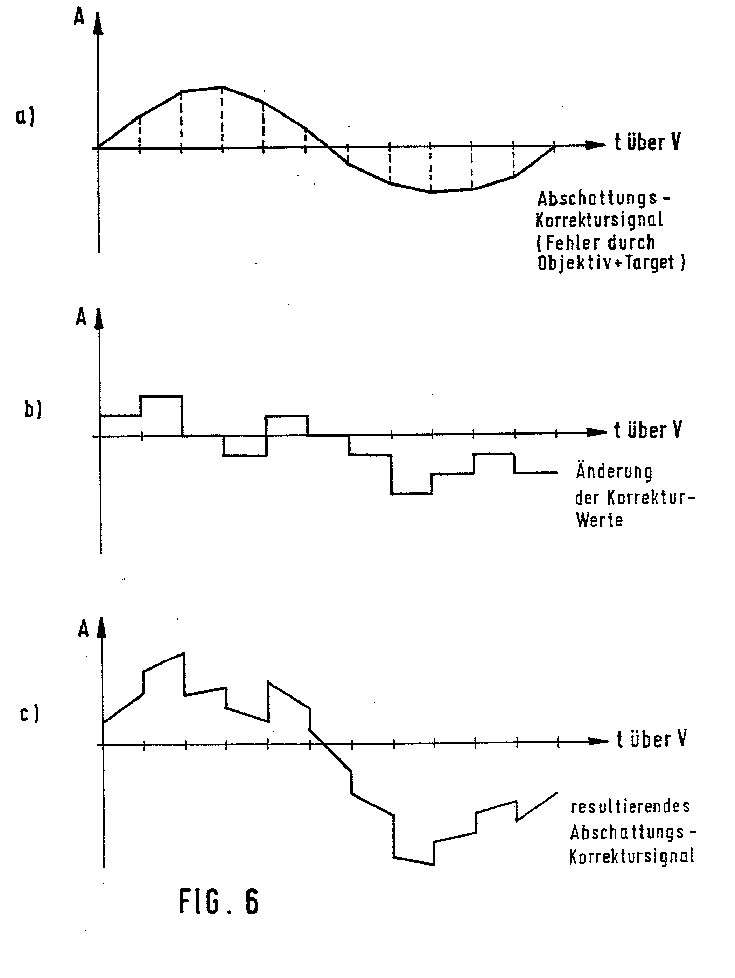

Durch das der vertikalen Ablenkspannung hinzu addierte Korrektursignal verändert sich die Steigung des vertikalen Sägezahnsignals, d.h. der Abstand der Zeilen zueinander wird verändert. Durch die Änderung des Zeilenabstandes ändert sich die durch den Elektronenstrahl abgetastete Fläche und damit auch die abgelöschte Ladung. Die Folge sind unterschiedliche Helligkeitswerte der zwischen zwei in vertikaler Richtung liegenden Meßpunktreihen. Die Intensitätsverteilung der Helligkeit ist innerhalb eines Meßpunktintervalls annähernd konstant, da dort der Abstand der Zeilen konstant bleibt. Es treten also horizontal verlaufende Streifen unterschiedlicher Helligkeit auf. Diese ebenfalls zur Bildabschattung zählenden Fehler können in einem zweiten Korrekturvorgang behoben werden. Nach der Korrektur der vom Objektiv und der Signalelektrode erzeugten Bildabschattungsfehler, bei der ein Korrektursignal gemäß dem Polygonzug in Fig. 6a erzeugt wird, werden nun die durch die unterschiedlichen Helligkeitsintensitäten hervorgerufenen Bildabschattungsfehler korrigiert. Für diese Korrektur wird keine Interpolation zwischen zwei in vertikaler Richtung benachbarten Korrekturwerten (z.B. $K_{11}$ und $K_{21}$) durchgeführt. Der Differenzwert beträgt hierbei also Null. Es werden nur die Korrekturwerte K so lange geändert, bis im Meßpunkt der Videosignalpegel den Referenzpegel erreicht hat, siehe dazu die in Fig. 6b angegebene Änderung der Korrekturwerte pro Korrekturwertintervall. Die so erzeugte Korrekturfunktion gemäß Fig. 6b wird nun zu der Korrekturfunktion der vorangegangenen Bildabschattungskorrektur gemäß Fig. 6a hinzu addiert, so daß eine resultierende Korrekturkurve für beide Bildabschattungskorrekturen gemäß Fig. 6c entsteht.

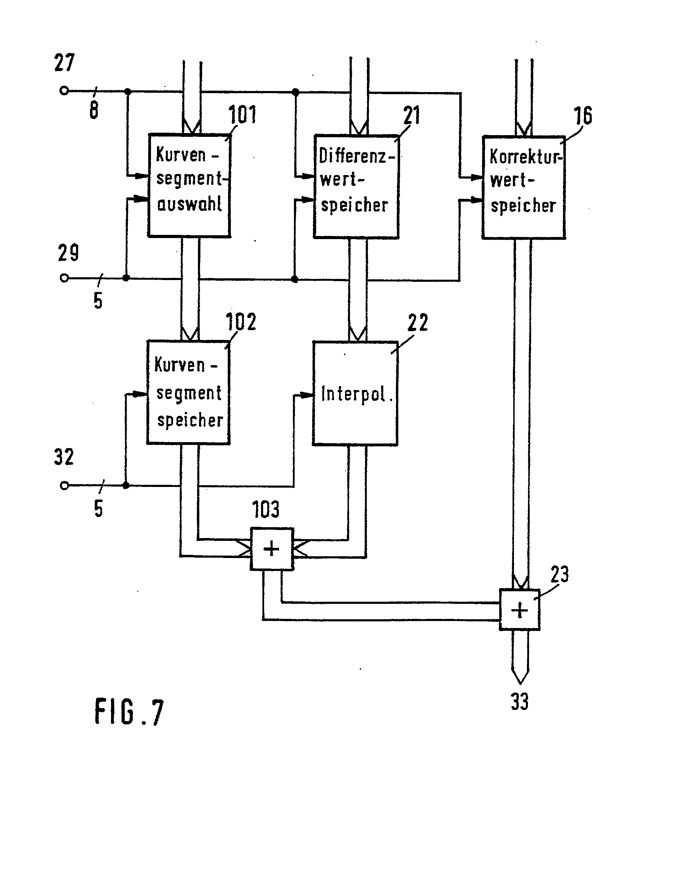

In Fig. 7 ist eine gegenüber Fig. 3 verbesserte Schaltung dargestellt. Durch die zusätzlichen Speichereinheiten Kurvensegmentauswahleinheit 101 und Kurvensegmentspeicher 102 werden die bei der Rasterkorrektur oben angegebenen Bildabschattungsfehler vermieden. In dem Kurvensegmentspeicher 102 (PROM) sind verschiedene Kurvensegmente abgespeichert. Bei einem Abgleichvorgang berechnet der Mikroprozessor 14 die Korrekturfunktion für die jeweilige Fehlerkorrektur, vergleicht sie mit den im Kurvensegmentspeicher 102 vorhandenen Kurvensegmenten und legt für einen bestimmten Korrekturpunkt in der Kurvensegmentauswahleinheit 101 die Adresse des entsprechenden Kurvensegmentes ab. Während der Abtastung des Bildes wird die Kurvensegmentauswahleinheit 101 kontinuierlich vom Zeilenspaltenzähler 26 über den Ausgang 27 und den Matrixreihenzähler 28 über den Ausgang 29 angesteuert und liefert nacheinander Adressenwerte für den Kurvensegmentspeicher 102. Die Ausgangswerte des Speichers 102 werden mit den Ausgangswerten des Interpolators 22 im Addierer 103 addiert, so daß an dessen Ausgang ein verbesserter Korrekturwert entsteht. Das Ausgangssignal des Addierers 103 wird danach dem Addierer 23 zugeführt und mit den Ausgangswerten des Korrekturwertspeichers 16 summiert. Mit diesen zusätz lich eingefügten Speichern 101 und 102 gelingt es, plötzliche Steigungsänderungen der Korrekturfunktion in vertikaler Richtung zu beseitigen und somit die durch die Interpolation bei der Rasterkorrektur verursachten Bildabschattungsfehler zu vermeiden.

## Patentansprüche

1. Verfahren zur Erzeugung von Korrektursignalen für die Raster- und Bildabschattungskorrektur einer Farbfernsehkamera, wobei die während der Aufnahme von Testbildern erzeugten, bestimmten Meßpunkten zugeordneten Videosignale mit Referenzsignalen eines diesen Meßpunkten entsprechenden matrixförmigen Punktrasters verglichen und bei Abweichung der Videosignale von den Referenzsignalen digitale Fehlersignale gewonnen werden, aus welchen durch Berechnung ein jedem Meßpunkt zugeordneter digitaler Korrekturwert pro Korrektur generiert und abgespeichert wird, wobei diese Korrekturwerte während der Bildabtastung kontinuierlich ausgelesen und bei einem ersten Korrekturabgleich zum Erzeugen einer stetigen Korrekturfunktion zwischen jeweils zwei in vertikaler Richtung benachbarten, mehrere Rasterzeilen einschließenden Meßpunkten für jede der zwischen zwei Meßpunkten befindlichen Korrekturstellen jeder Rasterzeile je ein interpolierter Differenzwert erzeugt und dem jeweiligen Korrekturwert des vorangehenden Meßpunktes an dieser Stelle hinzuaddiert wird, so daß der gebildete Summenwert den interpolierten Korrekturwert für die jeweilige Korrekturstelle jeder Rasterzeile bildet und nach D/A-Wandlung als Korrektursignale den Ablenkkreisen zur Rasterkorrektur und den Videoverarbeitungskreisen zur Bildabschattungskorrektur in geeigneter Weise zugeführt werden, dadurch gekennzeichnet, daß bei der Rasterkorrektur außer den Korrekturwerten der Meßpunkte die jeweilige Differenz von den in vertikaler Richtung jeweils benachbarten Korrekturwerten gespeichert und interpoliert wird und daß zur Erzeugung von Korrektursignalen für die Bildabschattungskorrektur von zwischen jeweils zwei Reihen von Meßpunkten befindlichen Bildbereichen die bei einem nochmaligen Abgleich der Bildabschattungskorrektur gewonnenen Korrekturwerte der in vertikaler Richtung liegenden Meßpunkte – unter Beibehaltung des jeweiligen Differenzwertes vom ersten Korrekturabgleich – dem jeweils zugehörigen Wert des zuvor erzeugten Bildabschattungskorrektursignals überlagert werden.

2. Verfahren zur Erzeugung von Korrektursignalen für die Rasterkorrektur einer Farbfernsehkamera nach Anspruch 1, dadurch gekennzeichnet, daß den Interpolationswerten jeweils zusätzlich ein Kurvensegment überlagert wird.

3. Verfahren nach Anpruch 1, dadurch gekennzeichnet, daß in einem ersten Korrekturintervall die digitalen Fehlersignale einen Zwischenspeicher (13) zu einem Mikroprozessor (14) und in einem zweiten Korrekturintervall die berechneten Korrekturwerte der Meßpunkte vom Mikroprozessor (14) einerseits zu einem Korrekturwertspeicher (16) und andererseits gleichzeitig zu einem Differenzwertspeicher (21) geleitet werden an dessen Ausgang ein Interpolator (22) angeschlossen ist, daß sowohl der Korrekturwertspeicher (16) als auch der Differenzwertspeicher (21) von einem horizontalfrequenten Spaltenzähler (26) und von einem vertikalfrequenten Reihenzähler (28) parallel adressiert werden, wodurch jedem Korrekturwert ein bestimmter Differenzwert zugeordnet ist, daß der Interpolator (22) von den Differenzwerten aus dem Differenzwertspeicher (21) und der Zeilennummer aus einem Videorasterzeilenzähler (31) adressiert wird, daß das Ausgangssignal des Korrekturwertspeichers (16) und das Ausgangssignal des Interpolators (22) addiert werden, und daß die so gewonnenen interpolierten digitalen Korrekturwerte nach D/A-Wandlung über einen Analogdemultiplexer (18) je einer Abtast- und Halte-Schaltung (41....56) und danach je einem Tiefpaß (61....76) zugeführt werden, deren Ausgangssignale die Ablenkkreise und die Videoverarbeitungskreise (7) im Sinne einer Verringerung der Abweichung vom Referenzsignal regeln.

4. Verfahren nach Anspruch 2 und 3, dadurch gekennzeichnet, daß in einem programmierbaren Kurvensegmentspeicher (102) verschiedene Kurvensegmente abgelegt sind, daß in einer Kurvensegmentauswahleinheit (101) für jeden Korrekturwert eine Adresse des entsprechenden Kurvensegmentes abgelegt ist, daß die Kurvensegmentauswahleinheit (101) ebenso wie der Korrekturwertspeicher (16) und der Differenzwertspeicher (21) von dem horizontalfrequenten Spaltenzähler (26) und vom vertikalfrequenten Reihenzähler (28) parallel adressiert werden, daß der Kurvensegmentspeicher (102) von den Adressenwerten der Kurvensegmentauswahleinheit (101) und der Zeilennummer aus dem Videorasterzeilenzähler (31) angesteuert wird, daß das Ausgangssignal des Kurvensegmentspeichers (102) und das Ausgangssignal des Interpolators (22) addiert werden, und daß dieses Summensignal zu dem Ausgangssignal des Korrekturwertspeichers (16) addiert wird.

5. Verfahren nach Anspruch 3, dadurch gekennzeichnet, daß durch Umschalten der Adressebene des Interpolators (22) feiner quantisierte Interpolationswerte erzeugbar sind, daß diese Werte nach Pegelangleichung (durch Amplitudenkompression) an den Pegel der interpolierten Korrekturwerte zu letzteren addiert werden, und daß dieses höher quantisierte Korrektursignal den V-Ablenkkreisen zur Rasterkorrektur zugeführt wird.

## Claims

1. Method for producing correction signals for the raster and shading distortion correction of a colour television camera, in which the video signals associated with specific measuring points produced during the shooting of test cards are compared with reference signals of a matrix-like dot raster corresponding to said measuring points and in the case of a divergence of the video signals from the reference signals digital error signals are produced from which, by calculation, is generated and stored per correction a digital correction value associated with each measuring point, in which said correction values are continuously read out during scanning and during a first correction alignment for producing a continuous correction function between in each case two vertically adjacent measuring points enclosing several raster lines for each of the correction points between two measuring points for each raster line an interpolated difference value is produced and added to the correction value of the preceding measuring point at this location, so that the sum value formed forms the interpolated correction location of each raster line and following D/A-conversion are appropriately supplied as correction signal to the sweep circuits for raster correction and the video processing circuits for shading correction, characterized in that, apart from the correction values of the measuring points, during each raster correction the particular difference of the in each case vertically adjacent correction values is stored and interpolated and that for producing correction signals for the shading correction of picture areas located between in each case two rows of measuring points the correction values of the vertically located measuring points obtained during a further alignment of the shading correction and whilst retaining the particular difference value of the first correction alignment are superimposed on the associated value of the previously produced shading correction signal.

2. Method for producing correction signals for the raster correction of a colour television camera according to claim 1, characterized in that in each case a curve segment is additionally superimposed on the interpolation values.

3. Method according to claim 1, characterized in that in a first correction interval the digital error signals are passed via a buffer store (13) to a microprocessor (14) and in a second correction interval the calculated correction values of the measuring point are passed from the microprocessor (14) on the one hand to a correction value memory (16) and on the other hand simultaneously to a difference value memory (21), to whose output is connected an interpolator (22), at both the correction value memory (16) and the difference value memory (21) are addressed in parallel by a horizontal frequency column counter (26) and a vertical frequency row counter (28), so that a specific difference value is associated with each correction value, that the interpolator (22) is addressed by the difference values from the difference value memory (21) and the line number from a video raster line counter (31), that the output signal of the correction value memory (16) and the output signal of the interpolator (22) are added and that the thus obtained interpolated, digital correction values, following D/A-conversion are supplied via an analog demultiplexer (18) to in each case one sample and hold circuit (41...56) and subsequently in each case to a low-pass filter (61...76), whose output signals control the sweep circuits and video processing circuit (7) in the sense of reducing divergences compared with the reference signal.

4. Method according to claims 2 and 3, characterized in that various curve segments are filed in a programmable curve segment memory (102), that an address of the corresponding curve segment is filed in a curve segment selection unit (101) for each correction value, that the curve segment selection unit (101) and the correction value memory (16) and the difference value memory (21) are addressed in parallel by the horizontal frequency column counter (26) and the vertical frequency row counter (28), that the curve segment memory (102) is controlled by the address values of the curve segment selection unit (101) and the line number from the video raster line counter (31) and that the output signal of the curve segment memory (102) and the output signal of the interpolator (22) are added and that this sum signal is added to the output signal of the correction value memory (16).

5. Method according to claim 3, characterized in that by switching the address plane of the interpolator (22) more finely quantized interpolation values can be produced, that following level equalization (by amplitude compression) to the level of the interpolated correction values said values are added to the latter and that said more highly quantized correction signal is supplied to the vertical sweep circuits for raster correction.

## Revendications

1. Procédé pour la production de signaux de correction pour la correction de trame et de balayage de l'image d'une caméra de télévision en couleur, les signaux vidéo produits lors de la prise de vue d'images test et affectés à certains points de mesure étant comparés à des signaux de référence d'une trame de points en forme de matrice correspondant à ces points de mesure et, en cas d'écart des signaux vidéo d'avec les signaux de référence, des signaux d'erreur numérique étant obtenus, à partir desquels, par calcul, on produit et on met en mémoire pour chaque correction une valeur de correction numérique affectée à chaque point de mesure, ces valeurs de correction étant lues en continu pendant le balayage de l'image et, dans le cas d'une première compensation de correction, dans le but de produire une fonction de correction constante entre chaque fois deux points de mesure voisins en direction verticale, en incluant plusieurs lignes de trames, pour chacun des points de correction de chaque ligne de trame se trouvant entre deux points de mesure, une valeur de différence étant chaque fois produite et ajoutée en cet emplacement à la valeur de correction du point de mesure précédent, de sorte que la valeur de la somme formée, forme la valeur de correction interpolée de chaque emplacement de correction de chaque ligne de trame et est amené de manière adéquate, après une conversion numérique/analogique, à titre de signaux de correction, aux circuits de déviation pour réaliser une correction de trame et aux circuits de traitement vidéo dans le but d'une correction de balayage de l'image, caractérisé en ce que lors de la correction de trame, outre les valeurs de correction des points de mesure, chaque différence entre les valeurs de correction chaque fois voisines en direction verticale est mise en mémoire et interpolée et en ce que, dans le but de produire des signaux de correction pour la correction de balayage de l'image de zones d'images se trouvant entre chaque fois deux rangées de points de mesure, les valeurs de correction des points de mesure situés en direction verticale, qui son obtenus lors d'une compensation supplémentaire de la correction de balayage de l'image sont superposées, en conservant chaque valeur de différence de la première compensation de correction, à la valeur chaque fois correspondante du signal de correction de balayage de l'image qui a été produit auparavant.

2. Procédé pour la production de signaux de correction pour la correction de trame d'une caméra de télévision selon la revendication 1, caractérisé en ce qu'un segment de courbe est superposé en plus aux valeurs d'interpolation.

3. Procédé selon la revendication 1, caractérisé en ce que, dans un premier intervalle de correction, les signaux de défauts numériques sont conduits par l'intermédiaire d'une mémoire intermédiaire (13) à un microprocesseur (14) et, dans un deuxième intervalle de correction, les valeurs de correction calculées des points de mesure sont conduits par le microprocesseur (14), d'une part à une mémoire de valeurs de correction (16) et d'autre part simultanément à une mémoire de valeurs de différence (21), à la sortie de laquelle est raccordée un interpolateur (22), en ce qu'aussi bien la mémoire de valeurs de correction (16) qu'également la mémoire de valeurs de différence (21) sont adressées en parallèle d'un compteur de colonnes (26) de fréquence horizontale et par un compteur de lignes (28) de fréquence verticale, ce qui fait qu'une certaine valeur de différence est affectée a chaque valeur de correction, en ce que l'interpolateur est adressé par les valeurs de différences provenant de la mémoire de valeurs de différence (21) et par le numéro de ligne provenant d'un compteur de lignes (31) de tramage vidéo, en ce que le signal de sortie de la mémoire de valeurs de correction (16) et le signal de sortie de l'interpolateur (22) sont additionnées, et en ce que les valeurs de correction numériques interpolées ainsi obtenues sont chaque fois amenées, après une conversion numérique/analogique, par l'intermédiaire d'un démultiplexeur analogique (18), à un circuit de balayage et de maintien (41...56) et ensuite à un filtre passe-bas (61...76), dont les signaux de sortie règlent les circuits de déviation et les circuits de traitement des signaux vidéo (7), au sens d'une limitation des écarts par rapport au signal de référence.

4. Procédé selon les revendications 2 et 3, caractérisé en ce que différents segments de courbe sont placés dans une mémoire programmable de segments de courbe (102), en ce qu'une adresse du segment de courbe correspondant est placée pour chaque valeur de correction dans une unité de sélection de segments de courbe (101), en ce que l'unité de sélection de segment de courbe (101), tout comme la mémoire de valeurs de correction (16) et la mémoire de valeurs de différence (21) sont adressées en parallèle par le compteur de colonnes (26) à fréquence horizontale et par le compteur de lignes (28) à fréquence verticale, en ce que la mémoire de segments de courbe (102) est commandée par les valeurs d'adresse de l'unité de sélection de segment de courbe (101) et par le numéro de ligne provenant du compteur de lignes de tramage vidéo (21), en ce que le signal de sortie de la mémoire de segment de courbe (102) et le signal de sortie de l'interpolateur (22) sont ajoutés, et en ce que ce signal de somme est ajouté au signal de sortie de la mémoire de valeurs de correction (16).

5. Procédé selon la revendication 3, caractérisé en ce que par commutation des plans d'adresse de l'interpolateur (22), on peut produire des valeurs d'interpolation quantifiées plus finement, en ce que ces valeurs, après compensation de niveau (par compression d'amplitude) sont finalement ajoutées au niveau des valeurs de correction interpolées, et en ce que ce signal de correction quantifié à un niveau plus élevé est amené aux circuits de déviation verticaux pour réaliser une correction de trame.

EP 0 197 328 B1

FIG. 1

FIG. 2

Korrekturwert

$K_{11}$    $K_{12}$    $K_{13}$    $K_{14}$    $K_{15}$

H

$D_i$

$K_i$

$Z_{n-3}$

$K_{21}$

$Z_{n-2}$

$D$

$Z_{n-1}$

$Z_n$

$Z_{n+1}$

$Z_{n+2}$

$K_{31}$

$Z_{n+3}$

$K_{35}$

$Z_{n+4}$

$K_{32}$

V

EP 0 197 328 B1

FIG. 3

FIG. 4

FIG . 5

a)

A

t über V

Abschattungs-
Korrektursignal
(Fehler durch
Objektiv+Target )

b)

A

t über V

Änderung
der Korrektur-
Werte

c)

A

t über V

resultierendes
Abschattungs-
Korrektursignal

FIG. 6

FIG.7